# DEMANDE DE BREVET EUROPEEN

(11) **EP 1 376 201 A1**
(43) Date de publication de la demande: **02.01.2004**
(21) Numéro de dépôt: 03356092.1
(22) Date de dépôt: 17.06.2003
(51) Int. Cl.: G02C 5/22

(54) **Charniere elastique pour lunettes**

(30) Priorité: 18.06.2002 FR 0207754
(71) Demandeur: Decover, 01100 Oyonnax (FR)
(72) Inventeur: Dayret, Christian, 01100 Oyonnax (FR)
(74) Mandataire: Poncet, Jean-François

(57) **Abrégé**

Selon l'invention, une paire de lunettes est munie de charnières élastiques (6, 7) qui raccordent chacune une face de lunettes (3) à une branche de lunettes (1, 2) respective. La charnière élastique (6) comprend un bloc en élastomère élastique pouvant fléchir entre deux positions écartées d'environ 90°. La charnière élastique (6) se raccorde à chacune des extrémités au moyen d'une nervure de rétention qui s'engage dans une rainure correspondante de la première branche de lunettes (1) ou de la face de lunettes (3). La nervure de rétention (12a) est perpendiculaire aux faces supérieures (1b, 3b) de la première branche de lunettes (1) ou de la face de lunettes (3), et une patte élastique de verrouillage (14, 15) vient en appui sur ladite face supérieure (3b, 1b) de l'élément adjacent respectif pour s'opposer au démontage accidentel de la charnière élastique (6). On peut ainsi monter manuellement la charnière élastique (6) sans outillage ni colle, tout en permettant le démontage ultérieur, sans risque de démontage intempestif.

## Description

La présente invention concerne les paires de lunettes de vue ou de soleil, dans lesquelles la monture comporte des charnières élastiques reliant chacune l'une des branches à la face de la monture.

On a développé depuis quelques années des structures de monture de lunettes ayant une charnière élastique comprenant un bloc en élastomère élastique conformé pour fléchir élastiquement entre une position de repos fermée et une position d'utilisation déployée. Au repos, la charnière élastique a, entre ses deux extrémités, une configuration incurvée en arc. En position d'utilisation la charnière admet une déformation de flexion élastique d'au moins 90° et imprime à la branche de lunettes un couple de rappel approprié tendant à la ramener vers la position de repos.

Le bloc en élastomère élastique peut être fixé aux branches de lunettes ou à la face de lunettes par tous moyens appropriés, notamment par soudure, par collage, par vissage.

On a imaginé de relier la charnière élastique à la branche ou à la face en prévoyant, à chaque extrémité du bloc en élastomère, une nervure de rétention transversale en contre-dépouille destinée à s'engager en coulissement dans une rainure de section complémentaire d'une branche de lunettes ou d'une face de lunettes.

Le problème est alors qu'il y a un risque de glissement ultérieur de la nervure dans la rainure, produisant la séparation de la branche et de la face de lunettes.

Pour éviter cela, on peut bien entendu solidariser la nervure et la rainure par collage. Cela nécessite toutefois une opération supplémentaire, et il devient alors très difficile, voire impossible, de démonter à nouveau la monture de lunettes.

Il reste tout à fait préférable de prévoir entre la charnière élastique et les branches ou face de lunettes un mode de liaison purement manuel, permettant un assemblage sans recourir à aucun moyen extérieur tel que vis, colle ou outil.

Le problème proposé par la présente invention est de concevoir une nouvelle structure de charnière élastique pour lunettes comportant en elle-même tous les moyens assurant à la fois une grande facilité d'assemblage, une grande capacité de maintien pour éviter la séparation accidentelle des branches de lunettes par rapport à la face de lunettes, tout en conservant une possibilité de démontage volontaire ultérieur sans destruction et une possibilité de remontage successif.

L'invention prévoit en outre de tels moyens qui puissent être fabriqués à moindre coût, et qui puissent conserver leurs propriétés dans le temps sans perdre sensiblement leur efficacité.

Pour atteindre ces objets ainsi quel d'autres, l'invention prévoit une charnière élastique pour lunettes, comprenant un bloc en élastomère élastique conformé pour prendre entre ses deux extrémités, au repos, une configuration incurvée en arc et pour admettre une déformation de flexion élastique d'au moins 90° avec un couple de rappel approprié vers la position de repos, le bloc en élastomère ayant, à chacune de ses extrémités une nervure de rétention transversale en contre-dépouille destinée à s'engager en coulissement dans une rainure de section complémentaire d'une branche de lunettes ou d'une face de lunettes ;
selon l'invention, au droit de l'une des extrémités de la nervure de rétention, le bloc en élastomère élastique de charnière élastique comprend une patte élastique de verrouillage écartée de ladite extrémité de nervure de rétention d'un espace ayant une épaisseur appropriée, et se développant longitudinalement pour couvrir au moins partiellement ladite extrémité de nervure de rétention.

Selon un mode de réalisation particulier, la nervure de rétention présente une section transversale en T.

De préférence, le bloc en élastomère comprend un tronçon central et deux tronçons d'extrémité, chaque tronçon d'extrémité comportant une nervure de rétention et une patte élastique de verrouillage, le tronçon central étant relié aux tronçons d'extrémité par une zone de liaison de section réduite et située le long de la face intérieure concave de l'arc formé par le bloc en élastomère au repos.

Pour coopérer avec une telle charnière élastique, on peut d'autre part avantageusement prévoir que les branches et la face de lunettes ont des extrémités de raccordement munies chacune d'une rainure de section complémentaire recevant à coulissement une nervure de rétention de la charnière élastique correspondante, la rainure étant obturée à l'une de ses extrémités par une paroi de verrouillage d'épaisseur appropriée sensiblement égale à l'épaisseur de l'espace entre la nervure de rétention et la patte élastique de verrouillage correspondante, de sorte que, à l'état assemblé, la paroi de verrouillage s'encastre dans l'espace entre la nervure de rétention et la patte élastique de verrouillage pour s'opposer dans les deux sens au coulissement de la nervure de rétention dans la rainure.

De préférence, la charnière élastique présente une section transversale sensiblement égale à la section transversale des extrémités adjacentes de branches de lunettes et de face de lunettes.

D'autres objets, caractéristiques et avantages de la présente invention ressortiront de la description suivante de modes de réalisation particuliers, faite en relation avec les figures jointes, parmi lesquelles:
- la figure 1 montre en vue de dessus une structure de charnière élastique selon un mode de réalisation de la présente invention ;
- la figure 2 est une vue de face de la charnière de la figure 1, montrant la face extérieure convexe de la charnière ;
- la figure 3 est une vue d'arrière de la charnière de la figure 1, montrant la face intérieure concave de la charnière ;
- la figure 4 est une vue de dessous de la charnière de la figure 1 ;
- la figure 5 est une vue en coupe selon le plan B de la figure 4 ;
- la figure 6 est une vue en coupe selon le plan A de la figure 1 ;
- la figure 7 est une vue en coupe selon le côté F de la figure 4 ;
- la figure 8 est une vue en perspective d'une paire de lunettes munie d'une monture à charnières élastiques selon les figures 1 à 7 ; et
- la figure 9 est une vue en perspective partielle montrant la structure de l'extrémité d'une branche de lunettes pouvant recevoir l'extrémité de la charnière.

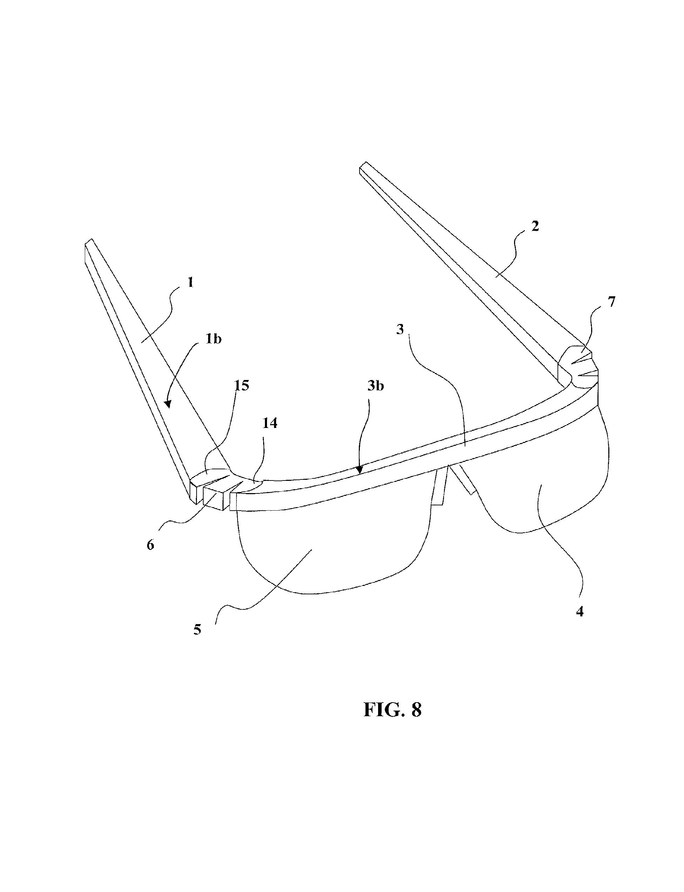

Comme le représente la figure 8, une paire de lunettes comprend généralement deux branches de lunettes 1 et 2 se raccordant aux deux extrémités d'une face de lunettes 3 qui elle-même porte les verres de lunettes 4 et 5.

La première branche de lunettes 1 se raccorde à la première extrémité de la face de lunettes 3 par une première charnière élastique 6. La seconde branche de lunettes 2 se raccorde à la seconde extrémité de la face de lunettes 3 par une seconde charnière élastique 7.

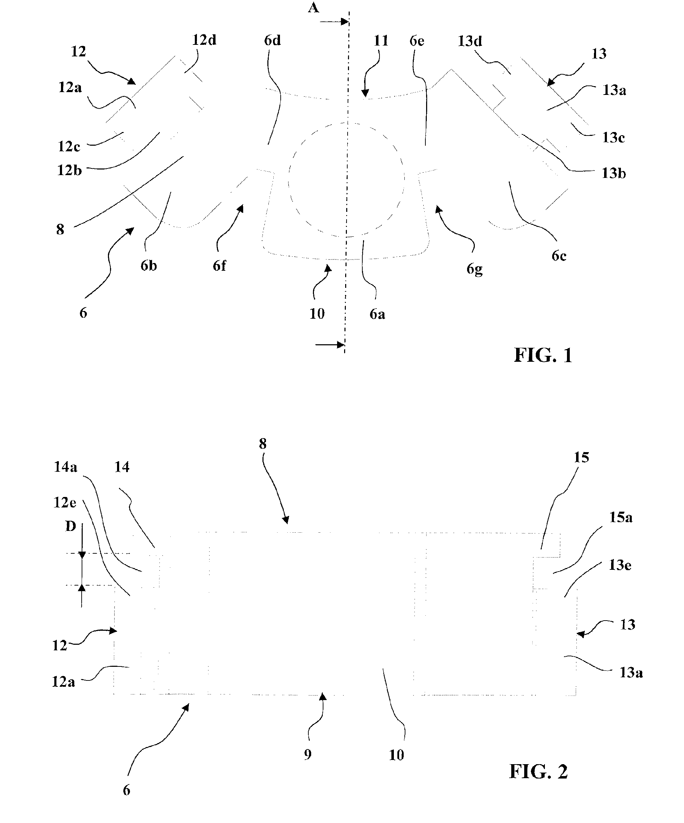

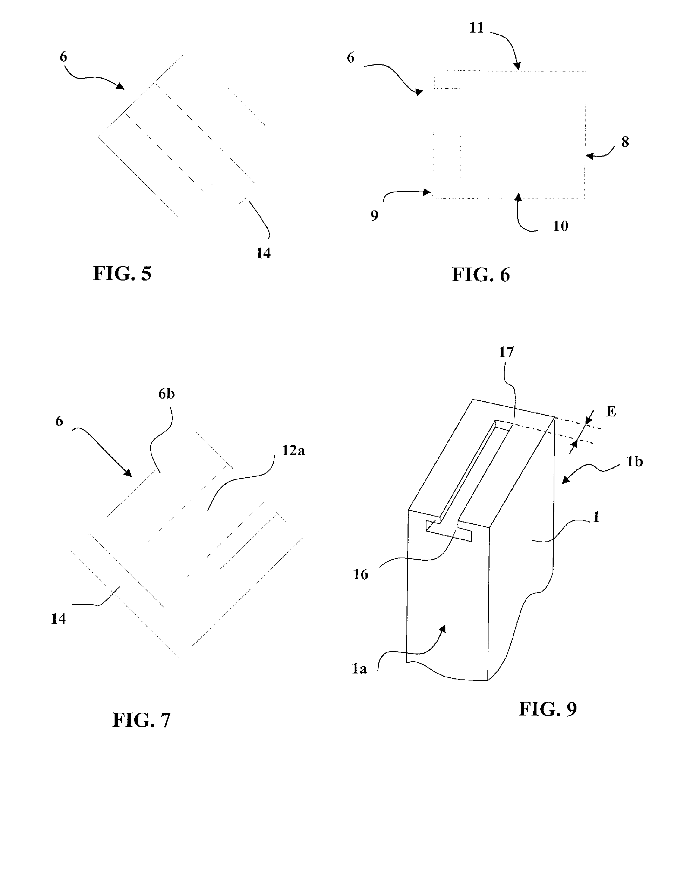

Chaque charnière peut être constituée comme illustrée dans le mode de réalisation des figures 1 à 7.

Les figures 1 à 7 illustrent la structure de la charnière élastique 6, constituée d'un bloc en élastomère élastique. Sur les figures, le bloc en élastomère élastique est représenté à l'état de repos, c'est-à-dire sollicité par aucune force extérieure. C'est la forme que prend la charnière élastique lorsque la paire de lunettes est en position fermée.

La charnière élastique 6 est limitée par une face supérieure 8, une face inférieure 9, une face extérieure convexe 10, une face intérieure concave 11, une première extrémité 12 et une seconde extrémité 13.

Dans le mode de réalisation illustré, le bloc en élastomère formant la charnière élastique 6 comprend un tronçon central 6a et deux tronçons d'extrémité respectivement 6b et 6c. Le tronçon central 6a est relié aux tronçons d'extrémité 6b et 6c par une zone de liaison respective 6d ou 6e de section réduite et située le long de la face intérieure concave 11 de l'arc formé par le bloc en élastomère au repos. En pratique, on voit ainsi, sur la face extérieure convexe 10, deux fentes 6f et 6g, qui se développent depuis la face supérieure 8 jusqu'à la face inférieure 9, avec une forme en coin.

Chaque extrémité 12 ou 13 de la charnière élastique 6 comporte une nervure de rétention, respectivement 12a et 13a, orientée transversalement et conformée en contre-dépouille pour s'engager en coulissement dans une rainure de section complémentaire (voir la rainure 16 sur la figure 9) d'une branche de lunettes ou d'une face de lunettes.

Dans la réalisation illustrée, chaque nervure de rétention 12a ou 13a présente une section transversale en T, avec une branche centrale respective 12b ou 13b de raccordement aux tronçons d'extrémité 6b ou 6c, et avec deux branches latérales d'extrémité respectivement 12c et 12d pour la nervure de rétention 12a, et 13c et 13d pour la nervure de rétention 13a.

Au droit de l'une des extrémités de la rainure de rétention, par exemple au droit de l'extrémité supérieure 12e (figure 2) de la nervure de rétention 12a, le bloc en élastomère élastique de charnière élastique 6 comprend une patte élastique de verrouillage 14, orientée longitudinalement et écartée de ladite extrémité supérieure 12e de nervure de rétention 12a d'un espace 14a ayant une épaisseur D appropriée, et se développant longitudinalement pour couvrir au moins partiellement l'extrémité supérieure 12e de nervure de rétention 12a.

De même, une patte élastique de verrouillage 15 recouvre au moins partiellement l'extrémité 13e de la seconde nervure de rétention 13a, avec un espace 15a similaire à l'espace 14a.

On considère maintenant la figure 9, qui illustre en perspective la zone d'extrémité de raccordement de la première branche de lunettes 1.

A cette extrémité, la première branche de lunettes 1 comporte une rainure 16, de section complémentaire pour recevoir à coulissement une nervure de rétention 12a ou 13a de la charnière élastique 6. La rainure 16 est obturée à l'une de ses extrémités par une paroi de verrouillage 17 d'épaisseur E sensiblement égale à l'épaisseur D de l'espace 14a ou 15a entre la nervure de rétention 12a, 13a et la patte élastique de verrouillage 14 ou 15 correspondante.

Par exemple, les nervures de rétention 12a et 13a sont orientées dans le sens de leur longueur depuis la face inférieure 9 vers la face supérieure 8 de la charnière élastique 6, et les pattes élastiques de verrouillage 14 et 15 prolongent la face supérieure 8 de la charnière élastique 6. Dans ce cas, la paroi de verrouillage 17 correspondante de l'extrémité de première branche de lunettes 1 obture l'extrémité supérieure de la rainure 16, rainure qui elle-même est orientée verticalement depuis la face inférieure la vers la face supérieure 1b de la première branche de lunettes 1.

Naturellement, la seconde branche de lunettes 2 comporte une extrémité similaire telle qu'illustrée sur la figure 9. Egalement, la face de lunettes 3 comporte, à chacune de ses extrémités, une forme identique à celle illustrée sur la figure 9, avec une rainure pour recevoir les nervures de rétention 12a ou 13a de la charnière élastique correspondante 6 ou 7.

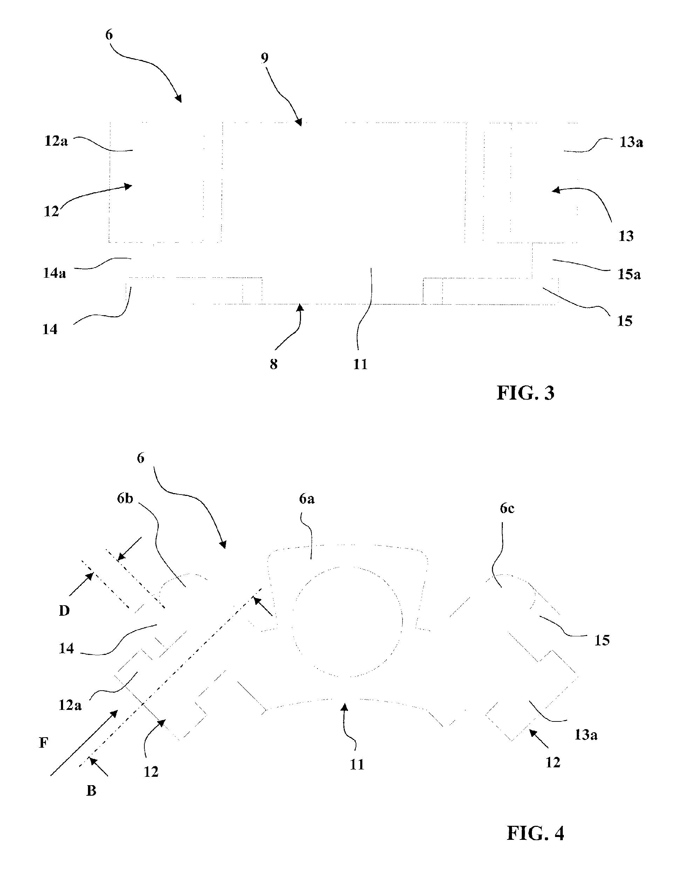

En position assemblée, telle qu'illustrée sur la figure 8, les deux nervures de rétention 12a et 13a de la charnière élastique 6 (figures 1 à 4) sont engagées dans les rainures correspondantes 16 (figure 9) de la face de lunettes 3 et de la première branche de lunettes 1, les parois de verrouillage telles que la paroi de verrouillage 17 (figure 9) s'engagent dans les espaces correspondants 14a et 15a (figures 2 et 3), et les pattes élastiques de verrouillage 14 et 15 sont en appui sur la face supérieure respective 3b de la face de lunettes 3 et 1b de la première branche de lunettes 1.

Autrement dit, en position assemblée, la paroi de verrouillage 17 s'encastre dans l'espace 14a ou 15a entre la nervure de rétention respective 12a ou 13a et la patte élastique de verrouillage correspondante 14 ou 15, et s'oppose ainsi dans les deux sens au coulissement de la nervure de rétention 12a ou 13a dans la rainure correspondante 16 de l'élément adjacent tel que la face de lunettes 3 ou une première branche de lunettes 1.

Dans la réalisation illustrée sur les figures, la charnière élastique 6 présente une section transversale sensiblement égale à la section transversale des extrémités adjacentes de branches de lunettes 1 ou 2 et de face de lunettes 3. La patte élastique de verrouillage 14 ou 15 constitue un élément faiblement proéminent, qui n'altère pas la qualité esthétique de l'ensemble

Le bloc constituant la charnière élastique 6 peut avantageusement être en un élastomère élastique, par exemple un élastomère vendu sous la marque Santoprène, de dureté Shore A d'environ 80.

Grâce à l'élasticité de la patte élastique de verrouillage 14 ou 15, celle-ci peut être déformée pour monter et pour démonter à nouveau la paire de lunettes sans dégradation. Sa raideur est toutefois suffisante pour empêcher un démontage intempestif de la monture de lunettes. La retenue des éléments les uns par rapport aux autres est suffisante pour éviter tout risque de démontage, et le montage peut être effectué manuellement sans intervention d'outil, de colle ou d'autre élément d'assemblage.

La présente invention n'est pas limitée aux modes de réalisation qui ont été explicitement décrits, mais elle en inclut les diverses variantes et généralisations contenues dans le domaine des revendications ci-après.

## Revendications

1. Charnière élastique (6) pour lunettes, comprenant un bloc en élastomère élastique conformé pour prendre entre ses deux extrémités, au repos, une configuration incurvée en arc et pour admettre une déformation de flexion élastique d'au moins 90° avec un couple de rappel approprié vers la position de repos, le bloc en élastomère ayant, à chacune de ses extrémités (12, 13) une nervure de rétention (12a, 13a) transversale en contre-dépouille destinée à s'engager en coulissement dans une rainure (16) de section complémentaire d'une branche de lunettes (1, 2) ou d'une face de lunettes (3), **caractérisée en ce que**, au droit de l'une des extrémités (12e) de la nervure de rétention (12a), le bloc en élastomère élastique de charnière élastique (6) comprend une patte élastique de verrouillage (14) écartée de ladite extrémité (12e) de nervure de rétention (12a) d'un espace (14a) ayant une épaisseur (D) appropriée, et se développant longitudinalement pour couvrir au moins partiellement ladite extrémité (12e) de nervure de rétention (12a).

2. Charnière selon la revendication 1, **caractérisée en ce que** la nervure de rétention (12a, 13a) présente une section transversale en T.

3. Charnière selon l'une des revendications 1 ou 2, **caractérisée en ce que** le bloc en élastomère comprend un tronçon central (6a) et deux tronçons d'extrémité (6b, 6c), chaque tronçon d'extrémité (6b, 6c) comportant une nervure de rétention (12a, 13a) et une patte élastique de verrouillage (14, 15), le tronçon central (6a) étant relié aux tronçons d'extrémité (6b, 6c) par une zone de liaison (6d, 6e) de section réduite et située le long de la face intérieure concave (11) de l'arc formé par le bloc en élastomère au repos.

4. Charnière selon l'une quelconque des revendications 1 à 3, **caractérisée en ce que** le bloc est en un élastomère élastique de type distribué sous la marque Santoprène.

5. Monture de lunettes comportant des charnières élastiques (6, 7) selon l'une quelconque des revendications 1 à 4.

6. Monture de lunettes selon la revendication 5, **caractérisée en ce que** les branches de lunettes (1, 2) et la face de lunettes (3) ont des extrémités de raccordement munies chacune d'une rainure (16) de section complémentaire recevant à coulissement une nervure de rétention (12a, 13a) de la charnière élastique correspondante (6, 7), la rainure (16) étant obturée à l'une de ses extrémités par une paroi de verrouillage (17) d'épaisseur (E) appropriée sensiblement égale à l'épaisseur (D) de l'espace (14a, 15a) entre la nervure de rétention (12a, 13a) et la patte élastique de verrouillage (14, 15) correspondante, de sorte que, à l'état assemblé, la paroi de verrouillage (17) s'encastre dans l'espace (14a, 15a) entre la nervure de rétention (12a, 13a) et la patte élastique de verrouillage (14, 15) pour s'opposer dans les deux sens au coulissement de la nervure de rétention (12a, 13a) dans la rainure (16).

7. Monture de lunettes selon la revendication 6, **caractérisée en ce que** la charnière élastique (6) présente une section transversale sensiblement égale à la section transversale des extrémités adjacentes de branches de lunettes (1, 2) et de face de lunettes (3).
